# EUROPÄISCHE PATENTSCHRIFT

(11) **EP 1 087 182 B1**
(45) Veröffentlichungstag und Bekanntmachung des Hinweises auf die Patenterteilung: **03.11.2004**
(21) Anmeldenummer: 00116872.3
(22) Anmeldetag: 04.08.2000
(51) Int. Cl.: F24D 3/14

(54) **Distanzplatte für einen Hohlraumboden und Hohlraumboden**
Spacer plate for a cavity floor and cavity floor
Plaque intercalaire pour un plancher surélevé et plancher surélevé

(30) Priorität: 21.09.1999 DE 29916642 U
(43) Veröffentlichungstag der Anmeldung: 28.03.2001
(73) Patentinhaber: Siegmund, Helmut, 53604 Bad Honnef (DE)
(72) Erfinder: Siegmund, Helmut, 53604 Bad Honnef (DE)
(74) Vertreter: Schaumburg, Thoenes, Thurn, Landskron Patentanwälte

(56) Entgegenhaltungen:
- EP-A- 0 371 268
- US-A- 4 326 366
- US-A- 4 993 202

## Beschreibung

Die Erfindung betrifft eine Distanzplatte für einen Hohlraumboden, die über ihre Fläche verteilt angeordnete und zur Auflage auf einem Unterboden bestimmte Distanzelemente sowie Halterungselemente zur Halterung von Rohren für ein Heiz- oder Kühlmedium hat, wobei die Distanzelemente von nach einer Plattenseite hinweisenden kegelstumpfförmigen Höckern gebildet sind.

Eine derartige Distanzplatte ist beispielsweise aus der EP 371 268 bekannt. Bei dieser bekannten Lösung besteht die Distanzplatte aus einer Kunststofffolie, in der die Distanzelemente von tiefgezogenen Höckern gebildet sind, während die Halterungselemente von Klemmnocken gebildet sind, die ebenfalls durch Tiefziehen nach der den Höckern entgegengesetzten Seite der Folie ausgeformt wurden. Dies hat zur Folge, daß die zwischen den Klemmnocken gehaltenen Rohre fast vollständig in den Estrich des Oberbodens eingegossen werden, so daß das von den Rohren transportierte Heizmedium seine Wärme größtenteils an den Estrich abgibt. Die möglicherweise durch den Unterboden geführte Luft kann nur wenig oder nur mit einer relativ großen Zeitverzögerung Wärme von den Rohren aufnehmen.

Der Erfindung liegt die Aufgabe zugrunde, eine Distanzplatte der eingangs genannten Art anzugeben, die bei Verwendung in einem Hohlraumboden die Möglichkeit bietet, daß die an ihr gehaltenenen Heizmittel- oder Kühlmittelrohre sowohl mit dem Oberboden als auch mit der den Hohlraum zwischen dem Oberboden und dem Unterboden durchströmenden Luft in Wärmeaustausch treten können.

Diese Aufgabe wird erfindungsgemäß dadurch gelöst, daß die Halterungselemente von Rinnen gebildet sind, die in der Distanzplatte zur gleichen Seite hin wie die Höcker so ausgeformt sind, daß sie die zu verlegenden Rohre auf mindestens der Hälfte ihres Umfanges umschließen.

Die das Heiz- oder Kühlmedium führenden Rohre ragen bei der erfindungsgemäßen Distanzplatte zumindest mit der Hälfte ihres Querschnittes in den durch die Distanzelemente gebildeten Hohlraum zwischen dem Oberboden und dem Unterboden. Dadurch können die Rohre sowohl mit dem Oberboden als auch mit der den Unterboden durchströmenden Luft in Wärmeaustausch treten. Dies bietet die Möglichkeit mit der den Hohlraumboden durchströmenden Luft relativ rasch die Temperatur der Raumluft zu ändern, d.h. zu erwärmen oder zu kühlen, während eine Änderung der Raumtemperatur über die Änderung der Temperatur des Oberbodens nur mit einer relativ großen Trägheit erreicht wird.

Die Distanzplatte kann wie bei der bekannten Lösung aus einer Kunststofffolie bestehen oder aber auch aus einem Metallblech hergestellt werden, wobei in beiden Fällen die Höcker und Rinnen durch Tiefziehen des Ausgangsmaterials hergestellt werden können. Es besteht jedoch auch die Möglichkeit, die Distanzplatte aus Mineralstoffen herzustellen, beispielsweise zu pressen.

Vorzugsweise sind die Höcker äquidistant in Zeilen und Spalten angeordnet, wobei sich die Rinnen spalten- und zeilenweise quer über die Höcker erstrecken, so daß sich ein rechtwinkliges Rinnennetz für das Verlegen der Rohre ergibt. Um eine größere Freiheit beim Verlegen der Rohre zu haben, ist es zweckmäßig, wenn weitere Rinnen vorgesehen sind, die sich diagonal zu den Spalten- und zeilenweise gerichteten Rinnen erstrecken.

Um das meanderförmige Verlegen von Rohren zu ermöglich, ist erfindungsgemäß zwischen je vier Höckern eine kreisförmige Rinne ausgebildet, die zwischen je zwei Höckern mit den Spalten- und zeilenweise gerichteten Rinnen zusammenfällt. Dadurch können Umkehrschleifen der Rohre auf der Distanzplatte gebildet werden.

Die Erfindung betrifft ferner einen Hohlraumboden mit einer auf einem Unterboden aufliegenden Distanzplatte-, an der Rohre für ein Kühl- oder Heizmedium angeordnet sind und die einen Oberboden trägt, wobei die Distanzplatte in der vorstehend beschriebenden Weise ausgebildet ist.

Die folgende Beschreibung erläutert in Verbindung mit den beigefügten Zeichnungen die Erfindung anhand eines Ausführungsbeispieles. Es zeigen:
- Figur 1: eine perspektivische Ansicht der erfindungsgemäßen Distanzplatte von oben,
- Figur 2: eine Draufsicht auf die erfindungsgemäße Distanzplatte von unten,
- Figur 3: eine Seitenansicht der erfindungsgemäßen Distanzplatte und
- Figur 4: einen schematischen Schnitt durch einen Hohlraumboden unter Verwendung einer erfindungsgemäßen Distanzplatte.

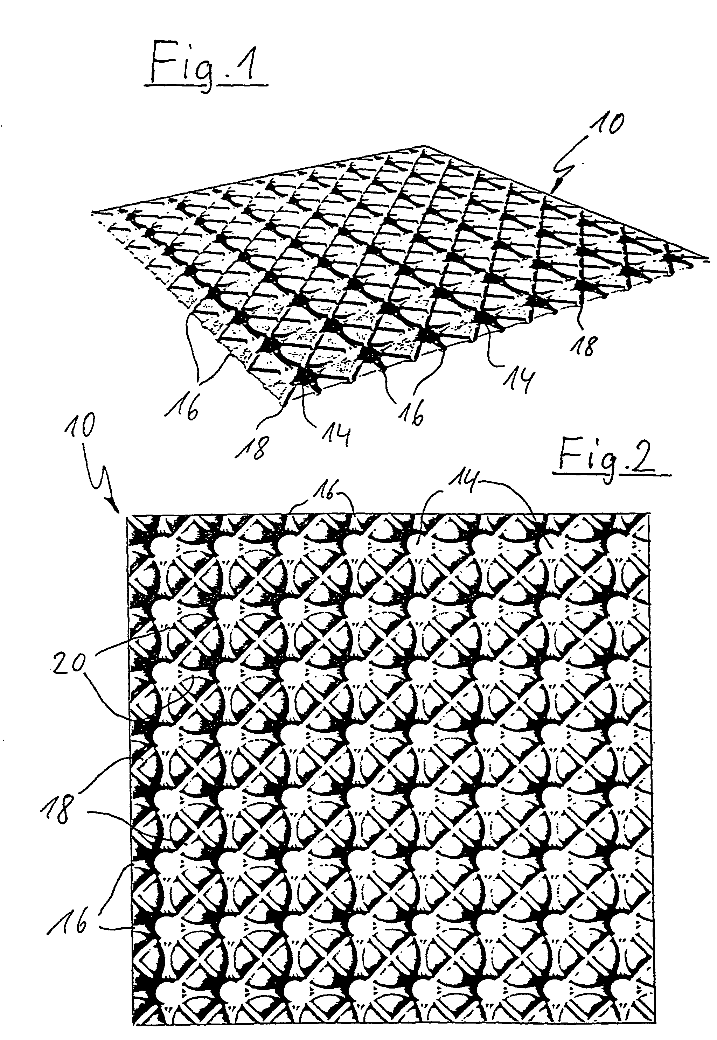

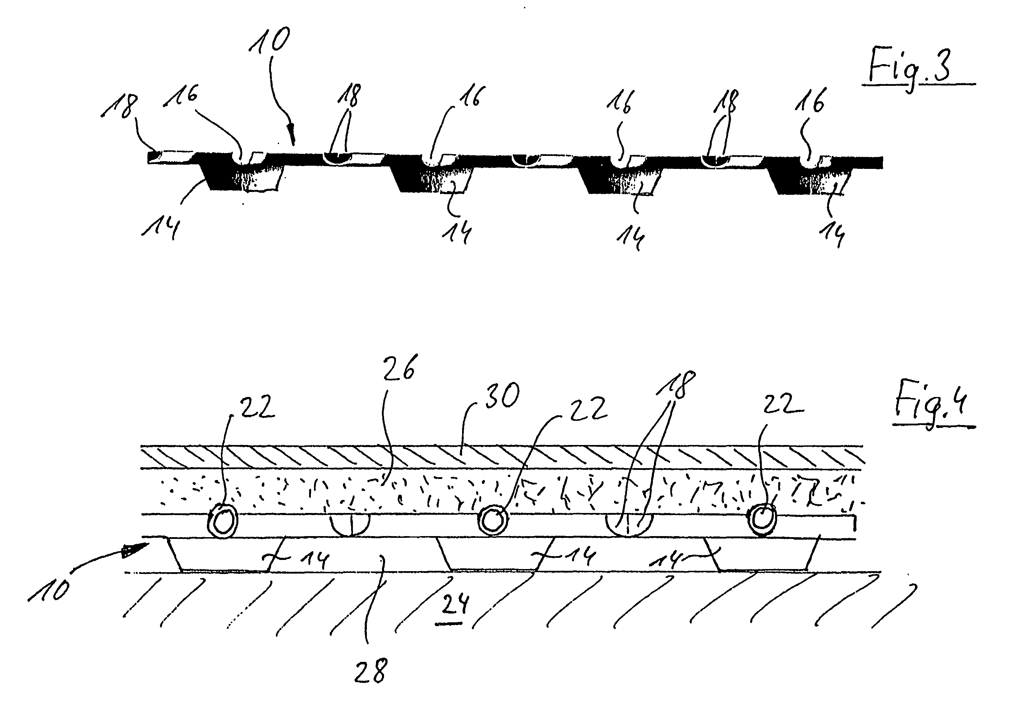

Die in der Figur 1 dargestellte allgemein mit 10 bezeichnete Distanzplatte besteht aus einer Kunststofffolie 12, in der durch Tiefziehen spalten- und zeilenweise angeordnete Näpfe (von der Oberseite her betrachtet) oder Höcker 14 (von der Unterseite her betrachtet) ausgeformt sind. Die Höcker 14 haben die Form eines Kegelstumpfes und bilden die Distanzelemente der Distanzplatte 10. Ferner sind in der Kunststofffolie 12 durch Tiefziehen zur selben Seite wie die Höcker 14 hin erste Rinnen 16 ausgebildet, die sich spalten- und zeilenweise parallel zu den Rändern der rechteckigen oder quadratischen Distanzplatte 10 quer über die Distanzelemente 14 erstrecken. Ferner erkennt man in den Figuren 1 und 2 zweite Rinnen 18, die diagonal zu den ersten Rinnen 16 verlaufen. Schließlich ist zwischen je vier Höckern 14 eine kreisförmige dritte Rinne 20 ausgeformt, welche je zwei parallele benachbarte erste Rinnen 16 miteinander verbindet, d.h. zwischen zwei einander benachtbarten Höckern 14 mit dem zwischen diesen Höckern verlaufenden geradlinigen Rinnenabschnitt teilweise zusammenfällt, wie dies in Figur 2 zu erkennen ist.

Die Rinnen 16, 18 und 20 dienen zur Halterung von Rohren 22 (Figur 4) die ein Heiz- oder Kühlmittel führen und umschließen diese Rohre auf etwas mehr als deren halbem Umfang. Dadurch klemmen die Rohre 22 in den Rinnen und werden somit sicher gehalten.

Die Distanzplatte 10 kann auch statt aus einer Kunststofffolie aus einem Metallblech durch Tiefziehen hergestellt oder aber aus Mineralstoffen gepresst werden.

Figur 4 zeigt einen Hohlraumboden unter Verwendung einer in den Fiugren 1 bis 3 dargestellten Distanzplatte. Die Distanzplatte 10 wird auf einen Unterboden 24 so aufgelegt, daß die höckerförmigen Distanzelemente auf dem Unterboden 24 stehen. Anschließend werden die Heizmittelrohre 22 in der gewünschten Weise in die Rinnen 16, 18 und 20 eingelegt, wobei die Vielzahl der Rinnen eine große Freiheit bei der Verlegung der Rohren zulässt. Nun kann eine Estrichschicht 26 auf die Distanzplatte 10 aufgetragen werden, wobei der Estrich auch die Distanzelemente 14 ausfüllt und damit stabilisiert, so daß der zwischen der Distanzplatte 10 und dem Unterboden 24 gebildete Hohlraum 28 nicht zusammengedrückt werden kann. Auf den Estrich 26 wird der eigentliche Bodenbelag 30 aufgebracht.

Wie man in Figur 4 erkennt, liegen die Rohre 22 zumindest mit ihrem halben Umfang in dem Luftraum 28. Sie können also mit Luft, die durch den Hohlraum 28 hindurchgeleitet wird, in Wärmeaustausch treten. Die beispielsweise an den Fußbodenrändern in den Raum geblasene Luft ermöglicht eine rasche Änderung der Raumtemperatur. Gleichzeitig stehen die Rohre 22 aber auch mit dem Estrich 26 und damit dem Oberboden in Wärmeaustausch und können diesen in traditioneller Weise erwärmen oder kühlen.

## Patentansprüche

1. Distanzplatte (10) für einen Hohlraumboden, die über ihre Fläche verteilt angeordnete und zur Auflage auf einem Unterboden (24) bestimmte Distanzelemente (14) sowie Halterungselemente (16, 18, 20) zur Halterung von Rohren (22) für ein Heiz- oder Kühlmedium hat, wobei die Distanzelemente (14) von nach einer Plattenseite hinweisenden kegelstumpfförmigen Höckern (14) gebildet sind, **dadurch gekennzeichnet, daß** die Halterungselemente von Rinnen (16, 18, 20) gebildet sind, die in der Distanzplatte (10) zur gleichen Plattenseite hin wie die Höcker (14) so ausgeformt sind, daß sie die zu verlegenden Rohre (22) auf mindestens der Hälfte ihres Umfanges umschließen.

2. Distanzplatte nach Anspruch 1, **dadurch gekennzeichnet, daß** sie aus einer Kunststofffolie besteht.

3. Distanzplatte nach Anspruch 1, **dadurch gekennzeichnet, daß** sie aus einem Metallblech besteht.

4. Distanzplatte nach Anspruch 2 oder 3, **dadurch gekennzeichnet, daß** die Höcker (14) und Rinnen (16, 18, 20) durch Tiefziehen der Kunststofffolie (12) oder des Metallbleches ausgeformt sind.

5. Distanzplatte nach Anspruch 1, **dadurch gekennzeichnet, daß** sie aus Mineralstoffen besteht.

6. Distanzplatte nach einem der Ansprüche 1 bis 5, **dadurch gekennzeichnet, daß** die Höcker (14) äquidistant in Zeilen und Spalten angeordnet sind und daß sich die Rinnen (16) spalten- und zeilenweise quer über die Höcker erstrecken.

7. Distanzplatte nach Anspruch 6, **dadurch gekennzeichnet, daß** weitere Rinnen (18) vorgesehen sind, die sich diagonal zu den spalten- und zeilenweise gerichteten Rinnen (16) erstrecken.

8. Distanzplatte nach Anspruch 6 oder 7, **dadurch gekennzeichnet, daß** zwischen je vier Höckern (14) eine kreisförmige Rinne (20) ausgebildet ist, die zwischen je zwei Höckern (14) mit den spalten- und zeilenweise gerichteten Rinnen (16) mindestens teilweise zusammenfällt.

9. Hohlraumboden mit einer auf einem Unterboden 24 aufliegenden Distanzplatte (10), an der Rohre (22) für ein Kühl- oder Heizmedium angeordnet sind und die einen Oberboden (26, 30) trägt, **dadurch gekennzeichnet, daß** die Distanzplatte (10) nach einem der Ansprüche 1 bis 8 ausgebildet ist.

## Claims

1. A spacer plate (10) for a hollow floor, said spacer plate having spacer elements (14) distributed over its surface for engagement with an underfloor (24) and holding elements (16, 18, 20) for holding pipes (22) for a heating or cooling medium, the spacer elements (14) being formed by truncated cone-shaped protrusions (14) extending away from one side of the spacer plate, **characterized in that** the holding elements are formed by grooves (16, 18, 20) which are formed in the spacer plate (10) towards the same side as the protrusions (14) such that they surround the pipes (22) to be laid over at least half of the circumference of the pipes.

2. The spacer plate according to claim 1, **characterized in that** the spacer plate is made of a plastic foil.

3. The spacer plate according to claim 1, **characterized in that** the spacer plate is made of a metal sheet.

4. The spacer plate according to claim 2 or 3, **characterized in that** the protrusions (14) and grooves (16, 18, 20) are formed by deep drawing of the plastic foil (12) or the metal sheet.

5. The spacer plate according to claim 1, **characterized in that** the spacer plate is made of mineral matter.

6. The spacer plate according to one of the claims 1 to 5, **characterized in that** the protrusions (14) are arranged equidistantly in rows and columns and **in that** the grooves (16) extend column-wise and row-wise transversely over the protrusions.

7. The spacer plate according to claim 6, **characterized in that** further grooves (18) are provided which extend diagonally to the column-wise and row-wise oriented grooves (16).

8. The spacer plate according to claim 6 or 7, **characterized in that** between each four protrusions (14) a circular-shaped groove (20) is formed which coincides at least partially between each two protrusions (14) with the column-wise and row-wise oriented grooves (16).

9. A hollow floor having a spacer plate (10) resting on an underfloor (24), on which spacer plate pipes (22) for a cooling or heating medium are arranged, and which spacer plate supports an upper floor (26, 30), **characterized in that** the spacer plate (10) is formed according to one of the claims 1 to 8.

## Revendications

1. Plaque d'espacement (10) pour plancher alvéolaire, laquelle plaque d'espacement comporte des éléments d'espacement (14) répartis sur sa surface et destinés à être posés sur un plancher de base (24), ainsi que des éléments de support (16, 18, 20) destinés à supporter des tubes (22) pour médium de chauffage ou de refroidissement, les éléments d'espacement (14) étant formés par des bosses tronconiques (14) pointant vers un côté de la plaque, **caractérisée en ce que** les éléments de support sont formés par des rigoles (16, 18, 20) qui sont ménagées dans la plaque d'espacement (10) du même côté de la plaque que les bosses (14), et sont conformées de telle sorte qu'elles entourent les tubes (22) à poser sur au moins la moitié de leur périphérie.

2. Plaque d'espacement selon la revendication 1, **caractérisée en ce qu'**elle est constituée d'une feuille de matière plastique.

3. Plaque d'espacement selon la revendication 1, **caractérisée en ce qu'**elle est constituée d'une tôle métallique.

4. Plaque d'espacement selon la revendication 2 ou 3, **caractérisée en ce que** les bosses (14) et les rigoles (16, 18, 20) sont conformées par emboutissage profond de la feuille de matière plastique (12) ou de la tôle métallique.

5. Plaque d'espacement selon la revendication 1, **caractérisée en ce qu'**elle est constituée de matières minérales.

6. Plaque d'espacement selon l'une des revendications 1 à 5, **caractérisée en ce que** les bosses (14) sont disposées à équidistance en lignes et en colonnes, et **en ce que** les rigoles (16) s'étendent en lignes et en colonnes transversalement au-dessus des bosses.

7. Plaque d'espacement selon la revendication 6, **caractérisée en ce qu'**il est prévu d'autres rigoles (18) qui s'étendent en diagonale par rapport aux rigoles (16) orientées en lignes et en colonnes.

8. Plaque d'espacement selon la revendication 6 ou 7, **caractérisée en ce qu'**une rigole circulaire (20) est agencée entre chaque quatre bosses (14), et coïncide au moins partiellement entre chaque deux bosses (14) avec les rigoles (16) orientées en lignes et en colonnes.

9. Plancher alvéolaire doté d'une plaque d'espacement (10) qui repose sur un plancher de base (24), sur laquelle sont disposés des tubes (22) destinés à un médium de chauffage ou de refroidissement et qui supporte un plancher supérieur (26, 30), **caractérisé en ce que** la plaque d'espacement (10) est conformée selon l'une des revendications 1 à 8.
